# EUROPEAN PATENT APPLICATION

(11) **EP 4 465 677 A1**
(43) Date of publication of application: **20.11.2024**
(21) Application number: 22919360.2
(22) Date of filing: 11.01.2022
(51) Int. Cl.: H04W 24/02, H04W 52/02

(54) **MEASUREMENT RELAXATION METHOD AND APPARATUS, STORAGE MEDIUM, AND DEVICE**

(71) Applicant: Beijing Xiaomi Mobile Software Co., Ltd., Beijing 100085 (CN)
(72) Inventor: LI, Yanhua, Beijing 100085 (CN); HU, Ziquan, Beijing 100085 (CN)
(74) Representative: Dehns Germany Partnerschaft mbB
(86) International application number: PCT/CN2022/071407
(87) International publication number: WO 2023/133694

(57) **Abstract**

The present disclosure relates to the technical field of communications, and provides a measurement relaxation method and apparatus, a storage medium, and a device. The method comprises: obtaining a relaxation command message sent by a base station, and performing measurement relaxation on the basis of the relaxation command message. Embodiments of the present disclosure provide a method for instructing, by means of a relaxation command message, a UE to perform measurement relaxation. The flexibility is high, the range of application is wide, and power consumption is reduced.

## Description

### TECHNICAL FIELD

The disclosure relates to the field of communication technologies, and more particularly, to a measurement relaxation method and apparatus, a storage medium, and a device.

### BACKGROUND

In communication systems, a UE (User Equipment) can perform various measurement behaviors, such as a RLM (Radio Link Monitoring) measurement, a BFD (Beam Failure Detection) measurement, an RRM (Radio Resource Management) measurement, etc. Furthermore, a measurement relaxation mechanism is introduced for all the aforementioned measurement behaviors, save power consumption of the UE. How a base station instructs the UE to perform a measurement relaxation is an urgent problem to be solved.

### SUMMARY

The disclosure provides a measurement relaxation method and apparatus, a storage medium, and a device, to propose a method for instructing a user equipment (UE) to perform a measurement relaxation.

Embodiments of a first aspect of the disclosure provide a measurement relaxation method, performed by a UE. The method includes:
obtaining a relaxation command message sent by a base station, and performing a measurement relaxation based on the relaxation command message.

Embodiments of a second aspect of the disclosure provide a measurement relaxation method, performed by a base station. The method includes:
sending a relaxation command message to a UE.

Embodiments of a third aspect of the disclosure provide a measurement relaxation apparatus. The apparatus includes:
an obtaining module, configured to obtain a relaxation command message sent by a base station, and perform a measurement relaxation based on the relaxation command message.

Embodiments of a fourth aspect of the disclosure provide a measurement relaxation apparatus. The apparatus includes:
a sending module, configured to send a relaxation command message to a UE.

Embodiments of a fifth aspect of the disclosure provide a communication device, including a processor and a memory having a computer program stored thereon. The processor is configured to execute the computer program to cause the communication device to perform the method provided in the embodiments of the first aspect of the disclosure.

Embodiments of a sixth aspect of the disclosure provide a communication device, including a processor and a memory having a computer program stored thereon. The processor is configured to execute the computer program to cause the communication device to perform the method provided in the embodiments of the second aspect of the disclosure.

Embodiments of a seventh aspect of the disclosure provide a communication device, including a processor and an interface circuit.

The interface circuit is configured to receive code instructions and transmit the code instructions to the processor.

The processor is configured to execute the code instructions to perform the method provided in the embodiments of the first aspect of the disclosure.

Embodiments of an eighth aspect of the disclosure provide a communication device, including a processor and an interface circuit.

The interface circuit is configured to receive code instructions and transmit the code instructions to the processor.

The processor is configured to execute the code instructions to perform the method provided in the embodiments of the second aspect of the disclosure.

Embodiments of a ninth aspect of the disclosure provide a computer-readable storage medium having instructions stored thereon. When the instructions are executed, the method provided in the embodiments of the first aspect of the disclosure is performed.

Embodiments of a tenth aspect of the disclosure provide a computer-readable storage medium having instructions stored thereon. When the instructions are executed, the method provided in the embodiments of the second aspect of the disclosure is performed.

In summary, in the measurement relaxation method and apparatus, the storage medium, and the device provided in embodiments of the disclosure, the UE can obtain the relaxation command message sent by the base station and perform the measurement relaxation based on the relaxation command message. In this way, embodiments of the present disclosure provide a method for instructing, through the relaxation command message, the UE to perform the measurement relaxation, allowing the UE to determine to perform which types of relaxation on which cells based on the relaxation command message. This method has high flexibility, wide applicability, and can save energy consumption.

The additional aspects and advantages of the disclosure may be partially provided in the following description, which may become apparent from the following description, or may be understood through the practice of the disclosure.

### BRIEF DESCRIPTION OF THE DRAWINGS

The above and/or additional aspects and advantages of the disclosure will become apparent and readily appreciated from the following descriptions made with reference to the drawings, in which:
FIG. 1a is a flowchart of a measurement relaxation method according to an embodiment of the disclosure.
FIG. 1b is a flowchart of a measurement relaxation method according to an embodiment of the disclosure.
FIG. 1c is a flowchart of a measurement relaxation method according to an embodiment of the disclosure.
FIG. 1d is a flowchart of a measurement relaxation method according to an embodiment of the disclosure.
FIG. 2a is a flowchart of a measurement relaxation method according to another embodiment of the disclosure.
FIG. 2b is a flowchart of a measurement relaxation method according to another embodiment of the disclosure.
FIG. 3 is a flowchart of a measurement relaxation method according to another embodiment of the disclosure.
FIG. 4 is a block diagram of a measurement relaxation apparatus according to an embodiment of the disclosure.
FIG. 5 is a block diagram of a measurement relaxation apparatus according to another embodiment of the disclosure.
FIG. 6 is a block diagram of a user equipment according to an embodiment of the disclosure.
FIG. 7 is a block diagram of a base station according to an embodiment of the disclosure.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit the embodiments of the disclosure. The singular forms "a" and "the" used in the embodiments of the disclosure and the appended claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

Embodiments of the disclosure are described in detail below, and examples of which are illustrated in the accompanying drawings, in which the same or similar symbols indicate the same or similar elements. Embodiments described below with reference to the accompanying drawings are exemplary and are intended to be used to explain the disclosure and are not to be construed as a limitation of the disclosure.

A detailed description is made to a measurement relaxation method and apparatus, a storage medium, and a device provided in embodiments of the disclosure in the following, with reference to the accompanying drawings.

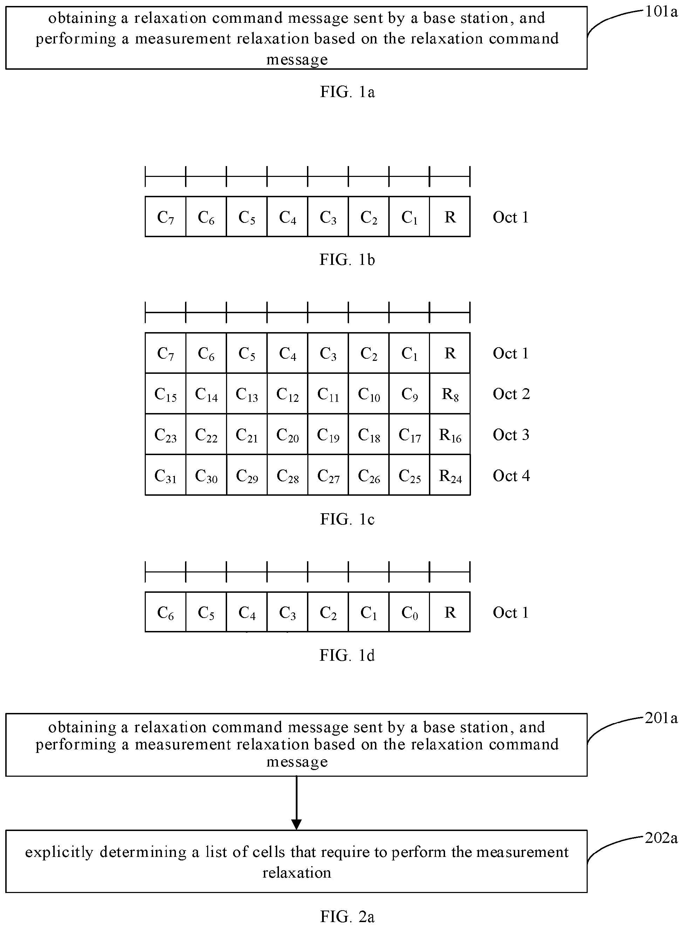

FIG. 1a is a flowchart of a measurement relaxation method according to an embodiment of the disclosure. The method is performed by a user equipment (UE). As illustrated in FIG. 1a, the measurement relaxation method includes following steps.

Step 101a, a relaxation command message sent by a base station is obtained, and a measurement relaxation is performed based on the relaxation command message.

It should be noted that, in an embodiment of the disclosure, the UE may be a device that provides voice and/or data connectivity to a user. A terminal, e.g., the UE, may communicate with one or more core networks through a radio access network (RAN). The UE can be an Internet of Things (IoT) terminal such as a sensor device, a mobile phone (or a "cellular" phone), and a computer with an IoT terminal, such as a fixed, portable, pocket, handheld, computer built-in, or vehicle-mounted device. For example, the UE may be a station (STA), a subscriber unit, a subscriber station, a mobile station, a mobile, a remote station, an access point, a remote terminal, an access terminal, a user device, or a user agent. Or, the UE may also be a device for an unmanned aerial vehicle. Or, the UE may also be an in-vehicle device, for example, an electronic control unit (ECU) having a wireless communication capability, or a wireless terminal external to an ECU. Or, the UE may also be a roadside device, such as a street light, a signal light, or other roadside device with a wireless communication capability.

In an embodiment of the disclosure, the relaxation command message indicates at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

For example, the relaxation command message may be a relaxation command field.

In a possible implementation, the relaxation command message may indicate that a relaxation to be performed is a radio link monitoring (RLM) measurement relaxation. In a possible implementation, the relaxation command message indicates that a relaxation to be performed is a beam failure detection (BFD) measurement relaxation. In a possible implementation, the relaxation command message indicates that a relaxation to be performed is a radio resource management (RRM) measurement relaxation.

In a possible implementation, the relaxation command message may indicate the terminal to enable or disable at least one of the above relaxation behaviors, such as simultaneously enabling the RLM measurement relaxation and the BFD measurement relaxation.

In a possible implementation, the relaxation command message may indicate the terminal to enable one relaxation behavior and disable another relaxation behavior, such as enabling the RLM measurement relaxation and disabling the BFD measurement relaxation.

In a possible implementation, the relaxed command message may explicitly or implicitly indicate whether an effective CG is a master cell group (MCG) or a secondary cell group (SCG).

In a possible implementation, the relaxing command message may indicate an effective cell range.

In an embodiment of the disclosure, the relaxation type may include at least one of:
an RLM measurement relaxation;
a BFD measurement relaxation; or
an RRM measurement relaxation.

In an embodiment of the disclosure, a method for obtaining the relaxation command message sent by the base station may include: obtaining the relaxation command message sent by the base station through signaling.

In an embodiment of the disclosure, the signaling may include at least one of:
RRC (Radio Resource Control) signaling;
MAC CE (Media Access Control Control Element) signaling; or
DCI (Downlink Control Information) signaling.

In an embodiment of the disclosure, the signaling used by the base station to send the relaxation command message may vary with the validated relaxation type indicated in the relaxation command message.

In an embodiment of the disclosure, in response to the at least one relaxation type validated by the relaxation command message including the RLM measurement relaxation and/or the RRM measurement relaxation, the base station may send the relaxation command message through the RRC signaling. In another embodiment of the disclosure, in response to the at least one relaxation type validated by the relaxation command message including the BFD measurement relaxation, the base station may send the relaxation command message through the DCI signaling.

In an embodiment of the disclosure, a method for the relaxation command message to indicate the at least one relaxation type validated may include: indicating the at least one relaxation type validated by the relaxation command message by including different carrying fields in the relaxation command message. In an embodiment of the disclosure, different relaxation types may correspond to different carrying fields. For example, the RLM measurement relaxation corresponds to a first carrying field, the BFD measurement relaxation corresponds to a second carrying field, and the RRM measurement relaxation corresponds to a third carrying field. When the relaxation command message includes the first carrying field, it indicates that an effective relaxation type indicated by the relaxation command message includes the RLM measurement relaxation. When the relaxation command message includes the second carrying field, it indicates that an effective relaxation type indicated by the relaxation command message includes the BFD measurement relaxation.

In an embodiment of the disclosure, a method for the relaxation command message to indicate whether to perform the relaxed measurement for each relaxation type in the at least one relaxation type validated by the relaxation command message may include: indicating whether to perform the relaxed measurement for a corresponding relaxation type by making the corresponding carrying field of each relaxation type to carry different values. In an embodiment of the disclosure, when a value carried by the carrying field is the first value (e.g. 1), it indicates to perform the relaxed measurement for the relaxation type corresponding to the carrying field. When a value carried by the carrying field is the second value (e.g. 0), it indicates to not perform the relaxed measurement for the corresponding relaxation type of the carrying field. For example, in an embodiment of the disclosure, if the relaxation command message includes the first carrying field, and the first value is carried in the first carrying field, it indicates that the relaxation command message indicates to perform the relaxed measurement for the RLM measurement.

In an embodiment of the disclosure, a method for the relaxation command message to indicate the CG that requires to perform the measurement relaxation may include at least one of:
the relaxation command message explicitly indicates the CG that requires to perform the measurement relaxation; or
the relaxation command message implicitly indicates the CG that requires to perform the measurement relaxation.

In an embodiment of the disclosure, the method for the relaxation command message to explicitly indicate the CG that requires to perform the measurement relaxation may include: using a bit value (Bit) to explicitly indicate the CG that requires to perform the measurement relaxation. For example, in an embodiment of the disclosure, when the bit value is the first value (e.g. 1), it indicates that the CG that requires to perform the measurement relaxation is an MCG. When the bit value is the second value (e.g. 0), it indicates that the CG that requires to perform the measurement relaxation is an SCG.

In an embodiment of the disclosure, a method for the relaxation command message to implicitly indicate the CG that requires to perform the measurement relaxation may include: determining the CG that requires to perform the measurement relaxation based on a type of the base station that sends the relaxation command message.

In an embodiment of the disclosure, the type of the base station may include a master node (MN) base station sending the relaxation command message. In response to the relaxation command message being sent by the MN base station, the relaxation command message indicates that the CG that requires to perform the measurement relaxation is an MCG. In response to the relaxation command message being sent by a secondary node (SN) base station, the relaxation command message indicates that the CG that requires to perform the measurement relaxation is an SCG.

In an embodiment of the disclosure, the method for the relaxation command message to indicate the list of cells that require to perform the measurement relaxation may include at least one of: indicating to the UE the cells that require to perform the measurement relaxation by carrying the list of cells in the relaxation command message, in which the list of cells may include cell identifiers of all cells in a CG that requires to perform the measurement relaxation; or indicating whether a cell requires to perform the measurement relaxation by setting the cell identifier of each cell to different values. When a value of a cell identifier of a cell is the first value, it indicates that the cell requires to perform the measurement relaxation. When a value of a cell identifier of a cell is the second value, it indicates that the cell does not require to perform the measurement relaxation.

For example, in an embodiment of the disclosure, a list of cells that require to perform the BFD measurement relaxation is sent through the MAC CE signaling, and a cell group that requires to perform the measurement relaxation only includes secondary cells (Scells) and the number of cells is 7. FIG. 1b is a schematic diagram of a list of cells provided in an embodiment of the present disclosure. Referring to FIG. 1b, Cᵢ corresponds to a value of a cell identifier of a Scell. If the value of Cᵢ is 1, it means that the cell requires to perform the BFD measurement relaxation. If the value of Cᵢ is 0, it means that the cell does not require to perform the BFD measurement relaxation. For example, C₁=0, it indicates that a cell with an identifier 0 in the Scells does not require to perform the BFD measurement relaxation.

In an embodiment of the disclosure, for example, a list of cells that require to perform the BFD measurement relaxation is sent through the MAC CE signaling, and a cell group that requires to perform the measurement relaxation only includes Scells and the number of cells is greater than 7. FIG. 1c is a schematic diagram of the list of cells provided in an embodiment of the present disclosure.

In another embodiment of the disclosure, for example, a list of cells that require to perform the BFD measurement relaxation is sent through the MAC CE signaling, and a cell group that requires to perform the measurement relaxation includes Spcells (special cell) and Scells and the number of cells is less than 7. FIG. 1d is a schematic diagram of the list of cells provided in an embodiment of the present disclosure.

In another embodiment of the disclosure, for example, a list of cells that require to perform the BFD measurement relaxation is sent through the MAC CE signaling, and a cell group that requires to perform the measurement relaxation includes Spcells (special cell) and Scells and the number of cells is greater than 7, a schematic diagram of the list of cells may be as shown in FIG. 1c (i.e. a 4x8 format).

In summary, in the measurement relaxation method provided in embodiments of the disclosure, the UE can obtain the relaxation command message sent by the base station and perform the measurement relaxation based on the relaxation command message. In this way, embodiments of the present disclosure provide a method instructing, through the relaxation command message, the UE to perform the measurement relaxation, allowing the UE to determine to perform which types of relaxation on which cells based on the relaxation command message. This method has high flexibility, wide applicability, and can save energy consumption.

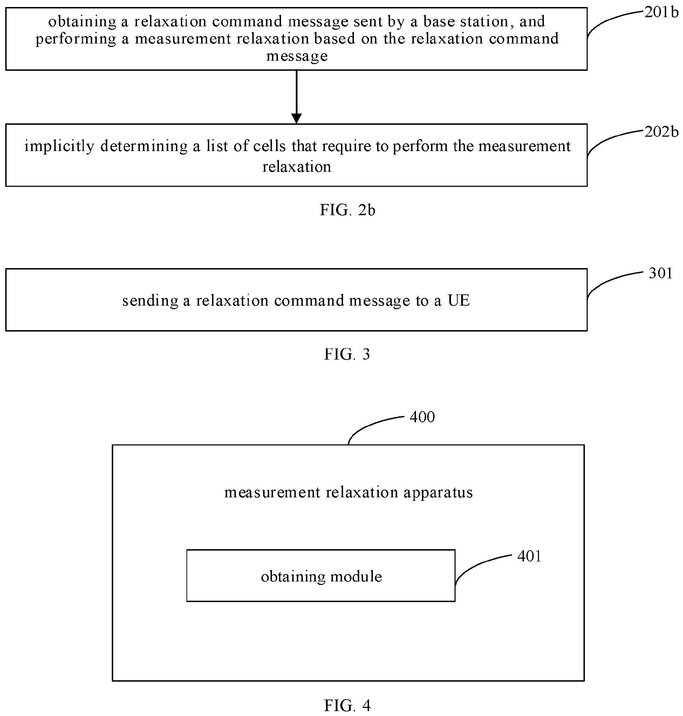

FIG. 2a is a flowchart of a measurement relaxation method according to another embodiment of the disclosure. The method is performed by a UE, as shown in FIG. 2, the measurement relaxation method may include the following steps.

Step 201a, a relaxation command message sent by a base station is obtained, and a measurement relaxation is performed based on the relaxation command message.

The detailed introduction of step 201a can refer to the relevant introduction in the above embodiments, and it is not elaborated in embodiments of the disclosure.

Step 202a, a list of cells that require to perform the measurement relaxation is explicitly determined.

In an embodiment of the disclosure, when the UE obtains the relaxation command message sent by the base station, it can determine whether the relaxation command message carries a cell list. When the relaxation command message carries the cell list, the UE can explicitly determine the list of cells that require to perform the measurement relaxation based on values corresponding to respective cell identifiers in the cell list. A detailed introduction to the list of cells may refer to the description of the above embodiments, and it is not elaborated in embodiments of the disclosure.

It should be understood that, steps 201a and 202a can be implemented separately or in combination, and the execution sequence can be adjusted as needed.

In summary, in the measurement relaxation method provided in embodiments of the disclosure, the UE can obtain the relaxation command message sent by the base station and perform the measurement relaxation based on the relaxation command message. In this way, embodiments of the present disclosure provide a method for instructing, through the relaxation command message, UE to perform the measurement relaxation, allowing the UE to determine to perform which types of relaxation on which cells based on the relaxation command message. This method has high flexibility, wide applicability, and can save energy consumption.

FIG. 2b is a flowchart of a measurement relaxation method according to another embodiment of the disclosure. The method is performed by a UE, as shown in FIG. 2, the measurement relaxation method may include the following steps.

Step 201b, a relaxation command message sent by a base station is obtained, and a measurement relaxation is performed based on the relaxation command message.

The detailed introduction of step 201b can refer to the relevant introduction in the above embodiments, and it is not elaborated in embodiments of the disclosure.

Step 202b, a list of cells that require to perform the measurement relaxation is implicitly determined.

In an embodiment of the disclosure, when the UE obtains the relaxation command message sent by the base station, it can determine whether the relaxation command message carries a cell list. When the relaxation command message does not carry the cell list, the UE can implicitly determine the list of cells that require to perform the measurement relaxation.

In an embodiment of the disclosure, a method for the UE to implicitly determine the list of cells that require to perform the measurement relaxation may include at least one of following methods.

Method 1: the list of cells that require to perform the measurement relaxation is determined based on a protocol agreement.

For example, in an embodiment of the disclosure, when the list of cells that require to perform the measurement relaxation is determined based on the protocol agreement, the protocol agreement stipulates that the measurement relaxation is performed for all SPcells (Special cells), or the protocol agreement stipulates that the measurement relaxation is performed for all Scells (Secondary Cells).

Method 2: the list of cells that require to perform measurement relaxation is determined based on a pre-notification from the base station.

The base station notifies in advance of the list of cells that require to perform the measurement relaxation. Thus, an effective cell range can be known in advance by the terminal. Optionally, the terminal can also determine the relaxation can be performed on which cells through measurement, and performs relaxation in the corresponding cells subsequently.

Method 3: the list of cells that require to perform the measurement relaxation is determined based on a type of the base station that sends the relaxation command message.

In an embodiment of the disclosure, a method for determining the list of cells that require to perform the measurement relaxation based on the type of base station that sends the relaxation command message may include: when the type of the base station that sends the relaxation command message is MN, it can be determined that the list of cells that require to perform the measurement relaxation are all cells corresponding to the MN base station, such as all Spells and Scells corresponding to the MN base station. Alternatively, it can be determined that the list of cells that require to perform the measurement relaxation are all Scells corresponding to the MN.

Method 4: the list of cells that require to perform the measurement relaxation is determined based on at least one effective relaxation type indicated by the relaxation command message.

In an embodiment of the disclosure, a method for determining the list of cells that require to perform the measurement relaxation based on at least one effective relaxation type indicated by the relaxation command message may include: if the effective relaxation type indicated by the relaxation command message is an RLM measurement relaxation, determining that the list of cells that require to perform the measurement relaxation are all Spcells; if the effective relaxation type indicated by the relaxation command message is the BFD measurement relaxation, determining that the list of cells that require to perform the measurement relaxation are all Scells; if effective relaxation type indicated by the relaxation command message is the RRM measurement relaxation, determining that the list of cells that require to perform the measurement relaxation is a primary cell (Pcells) on a master base station.

In addition, it should be noted that, in an embodiment of the disclosure, in addition to determining the list of cells that require to perform the measurement relaxation based on the effective relaxation type, the list of cells that require to perform the measurement relaxation can be determined based on a current communication scenario. For example, in an embodiment of the disclosure, if the effective relaxation type is the RRM measurement relaxation, and in an EN-DC (E-UTRA-NR Dual Connectivity) scenario, it is determined that the list of cells that require to perform the measurement relaxation are the Pscells (Primary Secondary Cells).

It should be understood that, steps 201b and 202b can be implemented separately or in combination, and the execution sequence can be adjusted as needed.

In summary, in the measurement relaxation method provided in embodiments of the disclosure, the UE can obtain the relaxation command message sent by the base station and perform the measurement relaxation based on the relaxation command message. In this way, embodiments of the present disclosure provide a method for instructing, through the relaxation command message, UE to perform the measurement relaxation, allowing the UE to determine to perform which types of relaxation on which cells based on the relaxation command message. This method has high flexibility, wide applicability, and can save energy consumption.

FIG. 3 is a flowchart of a measurement relaxation method according to another embodiment of the disclosure. The method is performed by a base station, as shown in FIG. 3, the measurement relaxation method may include the following steps:
Step 301, a relaxation command message is sent to a UE.

In an embodiment of the disclosure, the relaxation command message may indicate at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

In an embodiment of the disclosure, the relaxation type may include at least one of:
a radio link monitoring (RLM) measurement relaxation;
a beam failure detection (BFD) measurement relaxation; or
a radio resource management (RRM) measurement relaxation.

In an embodiment of the disclosure, obtaining the relaxation command message sent by the base station may include: obtaining the relaxation command message sent by the base station through signaling.

In an embodiment of the disclosure, the signaling may include at least one of following signaling types:
RRC signaling;
MAC CE signaling; or
DCI signaling.

In an embodiment of the disclosure, the signaling used by the base station to send the relaxation command message may vary with the validated relaxation type indicated in the relaxation command message.

In an embodiment of the disclosure, in response to the at least one relaxation type validated by the relaxation command message including the RLM measurement relaxation and/or the RRM measurement relaxation, the base station may send the relaxation command message through the RRC signaling. In another embodiment of the disclosure, in response to the at least one relaxation type validated by the relaxation command message including the BFD measurement relaxation, the base station may send the relaxation command message through the DCI signaling.

The introduction of step 301 can refer to the relevant introduction in the above embodiments, and it is not elaborated in embodiments of the disclosure.

In summary, in the measurement relaxation method provided in embodiments of the disclosure, the base station can send the relaxation command message to the UE. In this way, embodiments of the present disclosure provide a method instructing, through the relaxation command message, the UE to perform the measurement relaxation, allowing the UE to determine to perform which types of relaxation on which cells based on the relaxation command message. This method has high flexibility, wide applicability, and can save energy consumption.

FIG. 4 is a block diagram of a measurement relaxation apparatus according to an embodiment of the disclosure. As shown in FIG. 4, the measurement relaxation apparatus includes:
an obtaining module 401, configured to obtain a relaxation command message sent by a base station, and perform measurement relaxation based on the relaxation command message.

In summary, in the measurement relaxation apparatus provided in embodiments of the disclosure, the UE can obtain the relaxation command message sent by the base station and perform the measurement relaxation based on the relaxation command message. In this way, embodiments of the present disclosure provide a method instructing, through the relaxation command message, the UE to perform the measurement relaxation, allowing the UE to determine to perform which types of relaxation on which cells based on the relaxation command message. This method has high flexibility, wide applicability, and can save energy consumption.

In an embodiment of the disclosure, the relaxation command message indicates at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

In another embodiment of the disclosure, the relaxation type may include at least one of:
an RLM measurement relaxation;
a BFD measurement relaxation; or
an RRM measurement relaxation.

In another embodiment of the disclosure, indicating, by the relaxation command message, the CG that requires to perform the measurement relaxation includes at least one of:
the relaxation command message explicitly indicating the CG that requires to perform the measurement relaxation; or
the relaxation command message implicitly indicating the CG that requires to perform the measurement relaxation.

In another embodiment of the disclosure, the relaxation command message is sent by a master node (MN) base station or a secondary node (SN) base station.

The relaxation command message implicitly indicating the CG that requires to perform the measurement relaxation includes at least one of:
in response to the relaxation command message being sent by the MN base station, the relaxation command message indicating that the CG that requires to perform the measurement relaxation is a master cell group (MCG);
in response to the relaxation command message being sent by the SN base station, the relaxation command message indicating that the CG that requires to perform the measurement relaxation is a secondary cell group (SCG).

In another embodiment of the disclosure, the obtaining module 401 is further configured to:
obtain the relaxation command message sent by the base station through signaling.

In another embodiment of the disclosure, the signaling includes at least one of:
RRC signaling;
MAC CE signaling; or
DCI signaling.

In another embodiment of the disclosure, the apparatus is further configured to:
implicitly determine the list of cells that require to perform the measurement relaxation; or
explicitly determine the list of cells that require to perform the measurement relaxation.

In another embodiment of the disclosure, the apparatus is further configured to:
determine the list of cells that require to perform the measurement relaxation based on a protocol agreement; and/or
determine the list of cells that require to perform the measurement relaxation based on a pre-notification from the base station; and/or
determine the list of cells that require to perform the measurement relaxation based on a type of the base station that sends the relaxation command message; and/or
determine the list of cells that require to perform the measurement relaxation based on the at least one relaxation type validated by the relaxation command message.

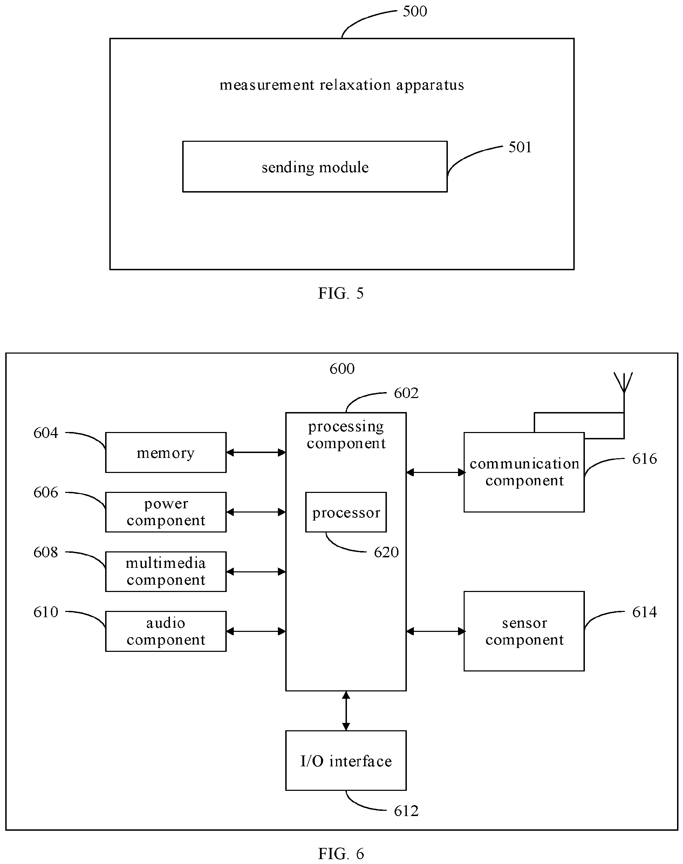

FIG. 5 is a block diagram of a measurement relaxation apparatus according to an embodiment of the disclosure. As shown in FIG. 5, the measurement relaxation apparatus includes
a sending module, configured to send a relaxation command message to a UE.

In summary, in the measurement relaxation apparatus provided in embodiments of the disclosure, the base station can send the relaxation command message to the UE. In this way, embodiments of the present disclosure provide a method instructing, through the relaxation command message, the UE to perform the measurement relaxation, allowing the UE to determine to perform which types of relaxation on which cells based on the relaxation command message. This method has high flexibility, wide applicability, and can save energy consumption.

In an embodiment of the disclosure, the relaxation command message indicates at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

In another embodiment of the disclosure, the relaxation type may include at least one of:
an RLM measurement relaxation;
a BFD measurement relaxation; or
an RRM measurement relaxation.

In another embodiment of the disclosure, indicating, by the relaxation command message, the CG that requires to perform the measurement relaxation includes at least one of:
the relaxation command message explicitly indicating the CG that requires to perform the measurement relaxation; or
the relaxation command message implicitly indicating the CG that requires to perform the measurement relaxation.

In another embodiment of the disclosure, the relaxation command message is sent by a master node (MN) base station or a secondary node (SN) base station.

The relaxation command message implicitly indicating the CG that requires to perform the measurement relaxation includes at least one of:
in response to the relaxation command message being sent by the MN base station, the relaxation command message indicating that the CG that requires to perform the measurement relaxation is a master cell group (MCG);
in response to the relaxation command message being sent by the SN base station, the relaxation command message indicating that the CG that requires to perform the measurement relaxation is a secondary cell group (SCG).

In another embodiment of the disclosure, the sending module 501 is further configured to:
sending the relaxation command message to the UE through signaling.

In another embodiment of the disclosure, the signaling includes at least one of:
RRC signaling;
MAC CE signaling; or
DCI signaling.

FIG. 6 is a block diagram illustrating a UE 600 according to an embodiment of the disclosure. For example, the UE 600 may be a mobile phone, a computer, a digital broadcasting terminal device, a message transceiver device, a game console, a tablet device, a medical device, a fitness device and a personal digital assistant.

As illustrated in FIG. 6, the UE 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the UE 600, such as the operations associated with display, telephone calls, data communications, camera operations, and recording operations. The processing component 602 may include one or more processors 620 to perform all or part of the steps in the above described method. Moreover, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operation of the UE 600. Examples of such data include instructions for any applications or methods operated on the UE 600, contact data, phonebook data, messages, pictures, videos, etc. The memory 604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 606 provides power to various components of the UE 600. The power component 606 may include a power management system, one or more power sources, and any other components associated with the generation, management, and distribution of power in the UE 600.

The multimedia component 608 includes a screen providing an output interface between the UE 600 and a user. In some embodiments, the screen may include a Liquid Crystal Display (LCD) and a Touch Panel (TP). In case that the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 608 includes a front-facing camera and/or a rear-facing camera. When the UE 600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 610 is configured to output and/or input audio signals. For example, the audio component 610 includes a microphone (MIC) configured to receive an external audio signal when the UE 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 613 includes one or more sensors to provide status assessments of various aspects of the UE 600. For instance, the sensor component 613 may detect an open/closed status of the UE 600, relative positioning of components, e.g., the display and the keypad, of the UE 600, a change in position of the UE 600 or a component of the UE 600, a presence or absence of user contact with the UE 600, an orientation or an acceleration/deceleration of the UE 600, and a change in temperature of the UE 600. The sensor component 613 may include a proximity sensor configured to detect the presence of nearby objects without any physical contact. The sensor component 613 may also include a light sensor, such as a Complementary Metal Oxide Semiconductor (CMOS) or Charge-Coupled Device (CCD) image sensor, for use in imaging applications. In some embodiments, the sensor component 613 may also include an accelerometer sensor, a gyroscope sensor, a magnetic sensor, a pressure sensor, or a temperature sensor.

The communication component 616 is configured to facilitate communication, wired or wirelessly, between the UE 600 and other devices. The UE 600 can access a wireless network based on a communication standard, such as Wi-Fi, 2G or 3G, or a combination thereof. In an embodiment, the communication component 616 receives a broadcast signal from an external broadcast management system or broadcasts associated information via a broadcast channel. In an embodiment, the communication component 616 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

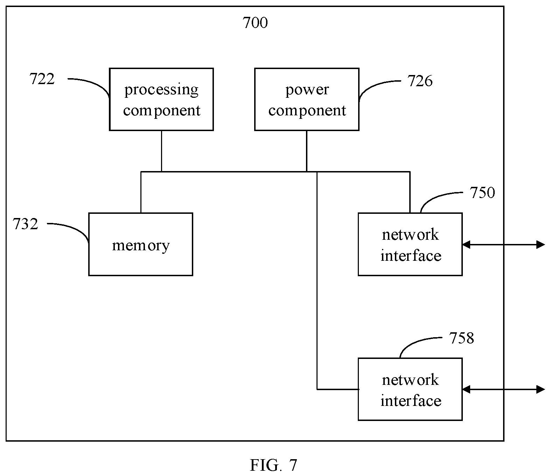

FIG. 7 is a block diagram illustrating a base station 700 of an embodiment of the disclosure. For example, the base station 7000 may be provided as a base station. As illustrated in FIG. 7, the base station 700 includes a processing component 711 consisting of one or more processors, and memory resources represented by a memory 732 for storing instructions that may be executed by the processing component 722, such as applications. The application programs stored in the memory 732 may include one or more modules each corresponding to a set of instructions. In addition, the processing component 717 is configured to execute the instructions to perform any of the methods described above that are applicable to the network device, for example, the methods shown in FIG. 1a.

The base station 700 may also include a power component 717 configured to perform power management of the base station 700, a wired or wireless network interface 750 configured to connect the base station 700 to a network, and an I/O interface 757. The base station 700 may operate based on an operating system stored in the memory 732, such as Windows Server^{™}, Mac OS X^{™}, Unix^{™}, Linux^{™}, FreeBSD^{™}, or the like.

In the above embodiments of the disclosure, the method provided in embodiments of the disclosure is introduced from the perspective of the base station, the UE, and the RIS array. In order to achieve the various functions of the method provided in the above embodiments of the disclosure, the base station and the UE may include a hardware structure, a software module, or hardware structure plus software module to achieve the above functions. One of the above functions can be executed in the form of hardware structure, software module, or hardware structure plus software module.

In the above embodiments of the disclosure, the method provided in embodiments of the disclosure is introduced from the perspective of the base station, the UE, and the RIS array. In order to achieve the various functions of the method provided in the above embodiments of the disclosure, the base station and UE may include a hardware structure, a software module, or hardware structure plus software module to achieve the above functions. One of the above functions can be executed in the form of hardware structure, software module, or hardware structure plus software module.

Embodiments of the disclosure provide a communication device. The communication device may include a transceiver module and a processing module. The transceiver module can include a sending module and/or a receiving module. The sending module is used to implement a sending function, the receiving module is used to implement a receiving function, and the transceiver module can implement the sending and/or receiving function.

The communication device can be a terminal (such as the terminal in the above method embodiments), a device within a terminal, or a device that can be used together with the terminal. Alternatively, the communication device can be a network device, a device within a network device, or a device that can be used together with the network device.

Embodiments of the disclosure provide another communication device. The communication device can be a network device, a terminal (such as the terminal in the above method embodiments), a chip, a chip system, or a processor that supports the network device to implement the above method, and can also be a chip, a chip system, or a processor that supports the terminal to implement the above method. The device can be used to implement the methods in the above method embodiments, as described in the above method embodiments.

The communication device may include one or more processors. The processor may be a general-purpose processor or a dedicated processor, such as, a baseband processor and a central processor. The baseband processor is used for processing communication protocols and communication data. The central processor is used for controlling the communication device (e.g., a network device, a baseband chip, a terminal, a terminal chip, a distributed unit (DU), or a central unit (CU)), executing computer programs, and processing data of the computer programs.

Optionally, the communication device may include one or more memories on which a computer program may be stored. The processor executes the computer program to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device may include one or more interface circuits. The interface circuits are used to receive code instructions and transmit them to the processor. The processor runs the code instructions to cause the communication device to perform the method described in the method embodiments.

The communication device is a terminal (such the terminal in the above method embodiments). The processor is configured to perform the method shown in FIGs. 1-2.

The communication device is a network device. The transceiver is configured to perform the method shown in FIG. 3.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device may be caused to perform the methods described in the method embodiments above. The computer program may be solidified in the processor, and in such case the processor may be implemented by hardware.

In an implementation, the communication device may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (such the UE in the above method embodiments), but the scope of the communication device described in the disclosure is not limited thereto, and the structure of the communication device may not be limited. The communication device may be a stand-alone device or may be part of a larger device. For example, the communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, the chip includes a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a system for determining a sidelink duration. The system includes the communication device as a terminal (such the first terminal in the above method embodiments) and the communication device as a network device in the above embodiments. Or, the system includes the communication device as a terminal (such the first terminal in the above method embodiments) and the communication device as a network device in the above embodiments.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A measurement relaxation method, performed by a user equipment (UE), comprising:
obtaining a relaxation command message sent by a base station; and
performing a measurement relaxation based on the relaxation command message.

2. The method of claim 1, wherein the relaxation command message indicates at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

3. The method of claim 2, wherein the relaxation type comprises at least one of:
a radio link monitoring (RLM) measurement relaxation;
a beam failure detection (BFD) measurement relaxation; or
a radio resource management (RRM) measurement relaxation.

4. The method of claim 2, wherein indicating, by the relaxation command message, the CG that requires to perform the measurement relaxation comprises at least one of:
the relaxation command message explicitly indicating the CG that requires to perform the measurement relaxation; or
the relaxation command message implicitly indicating the CG that requires to perform the measurement relaxation.

5. The method of claim 4, wherein the relaxation command message is sent by a master node (MN) base station or a secondary node (SN) base station, and the relaxation command message implicitly indicating the CG that requires to perform the measurement relaxation comprises at least one of:
in response to the relaxation command message being sent by the MN base station, the relaxation command message indicating that the CG that requires to perform the measurement relaxation is a master cell group (MCG);
in response to the relaxation command message being sent by the SN base station, the relaxation command message indicating that the CG that requires to perform the measurement relaxation is a secondary cell group (SCG).

6. The method of any of claims 1-5, wherein obtaining the relaxation command message sent by the base station comprises: obtaining the relaxation command message sent by the base station through at least one of following signaling types:
radio resource control (RRC) signaling;
media access control - control element (MAC CE) signaling; or
downlink control information (DCI) signaling.

7. The method of claim 2, further comprising at least one of:
implicitly determining the list of cells that require to perform the measurement relaxation; or
explicitly determining the list of cells that require to perform the measurement relaxation.

8. The method of claim 7, wherein implicitly determining the list of cells that require to perform the measurement relaxation comprises at least one of:
determining the list of cells that require to perform the measurement relaxation based on a protocol agreement;
determining the list of cells that require to perform the measurement relaxation based on a pre-notification from the base station;
determining the list of cells that require to perform the measurement relaxation based on a type of the base station that sends the relaxation command message; or
determining the list of cells that require to perform the measurement relaxation based on the at least one relaxation type validated by the relaxation command message.

9. A measurement relaxation method, performed by a base station, comprising:
sending a relaxation command message to a user equipment (UE).

10. The method of claim 9, wherein the relaxation command message indicates at least one of:
at least one relaxation type validated by the relaxation command message;
whether to perform a relaxed measurement for each relaxation type in the at least one relaxation type validated;
a cell group (CG) that requires to perform the measurement relaxation; or
a list of cells that require to perform the measurement relaxation.

11. The method of claim 10, wherein the relaxation type comprises at least one of:
a radio link monitoring (RLM) measurement relaxation;
a beam failure detection (BFD) measurement relaxation; or
a radio resource management (RRM) measurement relaxation.

12. The method of claim 10, wherein indicating, by the relaxation command message, the CG that requires to perform the measurement relaxation comprises at least one of:
the relaxation command message explicitly indicating the CG that requires to perform the measurement relaxation; or
the relaxation command message implicitly indicating the CG that requires to perform the measurement relaxation.

13. The method of claim 12, wherein the relaxation command message is sent by a master node (MN) base station or a secondary node (SN) base station,
wherein the relaxation command message implicitly indicating the CG that requires to perform the measurement relaxation comprises at least one of:
in response to the relaxation command message being sent by the MN base station, the relaxation command message indicating that the CG that requires to perform the measurement relaxation is a master cell group (MCG);
in response to the relaxation command message being sent by the SN base station, the relaxation command message indicating that the CG that requires to perform the measurement relaxation is a secondary cell group (SCG).

14. The method of any of claims 9-13, wherein sending the relaxation command message to the UE comprises:
sending the relaxation command message sent by the base station through signaling;
wherein the signaling comprises at least one of following types:
radio resource control (RRC) signaling;
media access control - control element (MAC CE) signaling; or
downlink control information (DCI) signaling.

15. A measurement relaxation apparatus, comprising:
an obtaining module, configured to obtain a relaxation command message sent by a base station, and perform measurement relaxation based on the relaxation command message.

16. A measurement relaxation apparatus, comprising:
a sending module, configured to send a relaxation command message to a user equipment (UE).

17. A communication device, comprising a processor and a memory having a computer program stored thereon, wherein the processor is configured to execute the computer program stored on the memory to cause the communication device to perform the method of any of claims 1 to 8.

18. A communication device, comprising a processor and a memory having a computer program stored thereon, wherein the processor is configured to execute the computer program stored on the memory to cause the communication device to perform the method of any of claims 9 to 14.

19. A communication device, comprising: a processor and an interface circuit; wherein,
the interface circuit is configured to receive code instructions and transmit the code instructions to the processor; and
the processor is configured to run the code instructions to perform the method of any one of claims 1 to 8.

20. A communication device, comprising: a processor and an interface circuit; wherein,
the interface circuit is configured to receive code instructions and transmit the code instructions to the processor; and
the processor is configured to run the code instructions to perform the method of any one of claims 9 to 14.

21. A computer-readable storage medium having instructions stored thereon, wherein when the instructions are executed, the method of any of claims 1 to 8 is performed.

22. A computer-readable storage medium having instructions stored thereon, wherein when the instructions are executed, the method of any of claims 9 to 14 is performed.
